# EUROPEAN PATENT APPLICATION

(11) **EP 4 725 323 A1**
(43) Date of publication of application: **15.04.2026**
(21) Application number: 23825598.8
(22) Date of filing: 30.11.2023
(51) Int. Cl.: A23P 20/25, A23G 1/54

(54) **LIQUID SANDWICH COMPOSITION, AND PREPARATION METHOD THEREFOR AND USE THEREOF**

(30) Priority: 06.06.2023 CN 202310660776
(71) Applicant: Kwok, Marcus Chun Kue, Ma On Shan, NT (HK)
(72) Inventor: Kwok, Marcus Chun Kue, Ma On Shan, NT (HK)
(74) Representative: Klunker IP Patentanwälte PartG mbB
(86) International application number: PCT/CN2023/135400
(87) International publication number: WO 2024/250599

(57) **Abstract**

Disclosed are a liquid center-filled composition and a preparation method and use thereof. The liquid center-filled composition comprises a solid fat layer and a liquid core enclosed within the solid fat layer. The water content of the liquid core is 10-100%. Solid fat is adopted innovatively as a shell layer in the present disclosure, which realizes the coating for liquid with high water content, and the variety of the liquid cores that can be coated is greatly increased. The prepared liquid center-filled compositions can be widely applied to center-filled food to obtain different flavors and tastes, and have great commercial application prospects. Moreover, the liquid center-filled composition prepared according to the present disclosure has the advantages of high stability and the liquid core being difficult to leak, so that long-distance transportation and long-time storage become feasible, thereby having great potential and practical significance.

## Description

### TECHNICAL FIELD

The present disclosure relates to the technical field of food processing, in particular to the preparation of center-filled food, and especially to a liquid center-filled composition, a preparation method and use thereof.

### BACKGROUND

Center-filled food has always been liked by consumers due to its unique taste and rich texture, especially the center-filled food with a fluid filling which is popular in recent years. Among them, center-filled chocolate is a highly popular chocolate product. Currently, center-filled chocolates such as Ganache and liquor-filled chocolate are both examples of soft-centered filled chocolates.

A preparation method of Ganache generally includes adding cream to chocolate to make a core, and different proportions of cream and chocolate have different effects when preparing. For example, when cream and chocolate are prepared in a ratio of 1:2, raw chocolate is obtained, which is more inclined to be in solid form; when cream and chocolate are prepared in a ratio of 1:1, chocolate or chocolate sauce is obtained; and when cream and chocolate are prepared in a ratio of 2:1, chocolate mousse is obtained. However, no matter which ratio is adopted, the core obtained can not have good flowing texture at normal temperature (about 25°C). Generally, the chocolate made by the above method in the market may be center-filled chocolate having a solid or soft filling.

A general method for making liquor-filled chocolates is to mix the liquor used for the filling with a large amount of sugar syrup to create the liquor filling. The specific method includes boiling sugar water to a high temperature, then adding alcohol, cooling, and adding the solution to chocolate. Because sugar water can dissolve more sugar at high temperature, the solubility of sugar becomes lower after cooling (physically, hotter water can dissolve more sugar, and colder water can dissolve less sugar). When the liquid dissolved with more sugar at high temperature becomes cold, a sugar shell can be formed in chocolate, such that the water therein is difficult to contact chocolate. However, the proportion of water in the liquor filling prepared from liquor and sugar water is very low (generally below 10%). Although this method can allow chocolate to encapsulate liquid with high fluidity, this process results in a high proportion of sugar. High sugar content can cause the liquid encapsulated in chocolate to become very sweet, and the small proportion of liquor can lead to the inability to maintain the taste of the liquid itself, and even it may be necessary to add essence to supplement the flavor. Moreover, high sugar content may also have adverse effects on people's health.

In addition, other center-filled foods (such as sugar-based center-filled foods) generally use the sugar shell to make the filling. However, the contents of sugar shell can only carry a very small amount of water, that is, the contents generally are emulsions formed by the combination of syrup of another flavor and essence due to the strong hydrophilicity of sugar. As described in patent document CN105050417A, a transparent or translucent liquid center-filled confectionery and a preparation method thereof are disclosed, and a sugar-free liquid edible composition and use thereof are also disclosed. The center-filled content of the liquid center-filled confectionery may only contain less than 5% of water, which exists in the form of water-in-oil emulsion. That is, the content should be added with emulsifier, and at the same time, when producing fruit flavor, it needs to be seasoned with essence or saccharin to meet the flavor demand, instead of directly adding puree components such as fruit juice. The water in fruit juice can easily dissolve sugar, which may lead to poor structure, appearance and taste, so that the taste requirements of consumers can not be met. Furthermore, such structure is unstable and it may be difficult to preserve and transport.

Another common gum-based center-filled food is center-filled chewing gum, that is, a gum-based filling layer is used to make a filling layer of chewing gum. The manufacture of the gum-based filling generally uses high-concentration Arabic gum or similar substances to prevent migration of moisture in the filling. As described in patent document CN1893833A, a liquid-filled confectionery uses Arabic gum as an intermediate layer to prevent liquid from moving out of the filling. High-concentration Arabic gum tastes similar to chewing gum. Although it can prevent migration of moisture, it is difficult to melt by saliva in the mouth at human body temperature. Therefore, such a filling is generally only used in chewing gum products, because chewing gum products are only chewed and not swallowed. It can be seen that once it is used in non-chewing gum products, the gum layer that is difficult to melt can form a strong foreign body sensation and strange taste, and is difficult to swallow. Thus, such gum layer is not suitable for foods other than chewing gum.

In addition to the above snacks such as Ganache, liquor-filled chocolate, sugar shell center-filled confectionery and gum-based center-filled confectionery, there are the following types of center-filled foods that consumers are mainly exposed to:
Quick-frozen center-filled food: in order to maintain high water content while consumers enjoy the food without affecting an outer layer, generally, quick freezing method is used to refrigerate the liquid in the filling to a solid state. Because the material in the filling has become solid, it can not react with the outer layer. After consumers heat food, they can enjoy a liquid filling layer. Common foods such as glutinous rice balls are made in this way. However, the problem with such a method is that it is necessary to keep the liquid in the filling of the food refrigerated to solid at all times, because only when the inner layer becomes solid, the structure of the outer layer may not be affected; and when enjoying, the food needs to be heated and eaten in time, otherwise the moisture in the filling will damage the outer layer and leak, such that the overall structure is destroyed.

Center-filled food produced on site: this kind of food is ready-to-eat food (for example, center-filled food such as custard bun in teahouse), wherein solid oil is generally encapsulated in an outer layer, and the food is heated to melt the filling layer when necessary. The food made by using such a method can only be eaten after heating, and consumers need to eat it immediately after heating, otherwise the liquid oil will change back to solid state at room temperature, and the effect of fluid filling cannot be achieved.

Other center-filled foods that need to be heated: this kind of food includes chocolate cakes with fluid fillings that need to be refrigerated, or custard mooncakes stored at room temperature. These foods also need to be heated to melt the fillings when consumers enjoy them, so that consumers can taste a fluid filling taste. Meanwhile, consumers need to eat them immediately after heating to avoid the fillings from being solidified.

In summary, center-filled food and center-filled snacks have existed in the market for a long time and have been highly sought after by consumers. The market share of center-filled food is also increasing year by year, which can be seen from traditional food such as soup balls to popular center-filled chocolate and custard mooncakes. However, it can be seen from the above prior art that it is very difficult to contain substances with high water content in chocolate or other snacks and foods because water itself is a powerful solvent and has a strong attraction to sugar substances (such as pure sugar or flour). Snacks on the market, such as center-filled biscuits, center-filled candies and center-filled chocolates, can carry a certain amount of sugar. Because sugar has strong hydrophilicity, these foods will definitely be damaged by moisture in their structure, taste or appearance, etc. Salt in salty snacks also faces the same problem: salt is also a common hydrophilic substance. Foods such as flour and biscuit also have strong water absorption, which leads to water being directly absorbed by flour and causes these foods to become wet and sticky, thus destroying food structure, taste, appearance, and the like. For the quick-frozen center-filled food, although the water content in the filling is high, this kind of center-filled food with high water content at normal temperature cannot be extended to the leisure snack market for a long time in the past because it cannot be stored at normal temperature, and the prior art did not provide a solution. In terms of taste, because the prior art cannot support the direct addition of daily pure liquids such as tea, milk and fruit juice to the above center-filled foods, most foods on the market are seasoned by adding solid substitutes such as matcha essence and milk powder. If there is a filling with high water content in the market, it must be welcomed by consumers. It can be seen from the above that the current technology cannot achieve this level. To achieve the above requirements, it is necessary to abandon the existing technical methods with various shortcomings and develop an independent and innovative new method to make the center-filled food with high water content at normal temperature possible.

### SUMMARY

In view of the deficiency of the prior art, a purpose of the present disclosure is to provide a liquid center-filled composition and a preparation method and use thereof.

The purpose of the present disclosure is realized by the following technical solutions:
In a first aspect, the present invention provides a liquid center-filled composition including a solid fat layer and a liquid core enclosed within the solid fat layer.

Preferably, the water content of the liquid core is 10-100%.

Preferably, the solid fat layer is prepared by using high melting point solid fat as a main raw material.

More preferably, the high melting point solid fat has a melting point of 20-45 °C. For example, the high melting point solid fat may have a melting point of 20-25 °C, 25-30 °C, 30-35 °C, 35-40 °C, 40-45 °C, or any value therebetween.

Preferably, the solid fat layer is prepared from at least one of coconut oil, butter, high melting point palm oil, cacao butter replacer, cocoa butter replacer, cacao butter, cocoa butter, hydrogenated or solidified vegetable oil, and refined vegetable oil.

Preferably, the high melting point palm oil includes palm oil having a melting point of 20-45 °C.

Preferably, the hydrogenated or solidified vegetable oil includes any one of hydrogenated or solidified soybean oil, hydrogenated or solidified rapeseed oil, hydrogenated or solidified peanut oil, hydrogenated or solidified sunflower oil, hydrogenated or solidified rice oil, hydrogenated or solidified tea seed oil, or a combination thereof, which is not limited in the present disclosure, as long as the melting point is 20-45 °C.

More preferably, the solid fat layer is prepared by cacao butter replacer and/or cocoa butter replacer or cacao butter and/or cocoa butter; and the cacao butter is any one of tempered cacao butter and non-tempered cacao butter and the cocoa butter is any one of tempered cocoa butter and non-tempered cocoa butter.

Most preferably, the cacao butter and the cocoa butter are tempered cacao butter and tempered cocoa butter obtained through tempering treatment. Through the experimental verification of the present disclosure, it is found that the tempered cacao butter or the tempered cocoa butter has very high hardness and stability at normal temperature and good taste, and is the most preferred raw material for preparing the solid fat layer.

Preferably, the preparation steps of the tempered cacao butter or the tempered cocoa butter include: heating the cacao butter or the cocoa butter to 44-46 °C for melting, cooling the melted cacao butter or the melted cocoa butter to 26-28 °C for 10-15 minutes, and heating the cacao butter or the cocoa butter to 31-33 °C for 10-15 minutes.

Preferably, the solid fat layer has a thickness less than or equal to 1 cm.

More preferably, the solid fat layer has a thickness of 0.05 mm to 1 cm.

Preferably, the preparation of the solid fat layer further includes adding a food additive. The food additive in the present disclosure is also called additives, which refer to chemical synthetic or natural substances added into food for improving food quality, color, aroma and taste, as well as for the needs of preservation and manufacturing process. In the present disclosure, the additives may be added as required, which is not specifically limited.

Preferably, the food additive is selected from at least one of edible and oil-soluble natural pigment, flavoring agent and spice. For example, the natural pigments can be brown pigments, yellow pigments, red pigments, blue pigments, purple pigments, orange pigments, green pigments, black pigments, and the like, which is not specifically limited. Different color pigments can be added according to specific product requirements. The addition amount of the natural pigments is not particularly limited, and they can be added in a conventional addition amount.

Preferably, the water content of the liquid core is in a range of 25-100%, for example, 25%, 30%, 35%, 40%, 45%, 50%, 55%, 60%, 65%, 70%, 75%, 80%, 85%, 90%, 95%, 100%, any point value therebetween, or a range between any two point values. More preferably, the water content of the liquid core is 35-100%.

Preferably, the liquid core is selected from at least one of water, fresh milk, cream, liquor, fruit juice, tea, soup, blended drink and sauce. The sauce herein includes various jams (such as strawberry jam, blueberry jam, and apple jam).

In a second aspect, the present invention provides a method for preparing a liquid center-filled composition, wherein the liquid center-filled composition is prepared by the method including the following steps A1-A3 or B1-B3:
A1, injecting a raw material for preparing the solid fat layer into a mold with a required shape and solidifying to obtain a concave solid fat layer having an opening at an upper end;
A2, injecting liquid into the concave solid fat layer from the opening at the upper end of the concave solid fat layer to a required level;
A3, injecting the raw material for preparing the solid fat layer above the liquid level for encapsulating to obtain the liquid center-filled composition;
   or
B1, injecting a raw material for preparing the solid fat layer into an inner shell mold with a required shape and solidifying to obtain a concave solid fat layer having an opening at an upper end;
B2, placing the concave solid fat layer prepared in the step B1 into an outer shell mold, and injecting liquid into the concave solid fat layer from the opening at the upper end of the concave solid fat layer to a required level;
B3, injecting the raw material for preparing the solid fat layer into the outer shell mold to coat the raw material on the outside of the concave solid fat layer and above the liquid level, and solidifying to form a second solid fat layer to obtain the liquid center-filled composition.

Preferably, the inner shell mold includes a first mold and a second mold, wherein the first mold has a first concave structure, the second mold has a first convex structure, the first convex structure of the second mold can be fitted in the first concave structure, and a cavity is provided between the first convex structure and the first concave structure. The cavity is used for forming a first solid fat layer. The outer shell mold includes a third mold having a second concave structure, and the size of the second concave structure is larger than that of the first concave structure.

Preferably, the liquid center-filled composition is prepared by the method including Steps B1-B3 when the raw material for preparing the solid fat layer is cacao butter and/or cocoa butter.

More preferably, in Steps B1-B3, the solidifying is carried out by being placed at 20-22°C for 1.5 to 3 hours.

Preferably, when the raw material for preparing the solid fat layer is cacao butter replacer and/or cocoa butter replacer, high melting point palm oil, butter or coconut oil, the liquid center-filled composition is prepared by the method including Steps A1-A3 or B1-B3.

In a third aspect, the present invention further provides use of the liquid center-filled composition in preparation of center-filled food.

Preferably, the center-filled food includes center-filled desserts. The center-filled desserts herein refer to the general name of desserts or pastry having a center-filled structure. The desserts or pastry refer to food made from one or more of cereals, beans, potatoes, oils, sugar, eggs and other food materials as main raw materials through modulation, molding, cooking and other processes.

Preferably, the center-filled desserts can be selected from any one of center-filled chocolate, center-filled biscuit, center-filled bread, center-filled mooncake, center-filled glutinous rice ball, center-filled crisp, center-filled candy and center-filled cake, but is not limited thereto. For example, the center-filled chocolates can be prepared by coating a chocolate outer layer on the outside of the liquid center-filled composition prepared according to the present disclosure; and other kinds of center-filled food can be prepared in a similar way by coating the outer layer of other raw materials, such as the outer layer prepared from biscuit raw materials, the outer layer prepared from bread raw materials, the outer layer prepared from mooncake wrapper raw materials, the outer layer prepared from glutinous rice raw materials, the outer layer prepared from candy raw materials, the outer layer prepared from cake raw materials, on the outside of the liquid center-filled composition to obtain the corresponding center-filled food.

Compared with the prior art, the present disclosure may have the following beneficial effects:
Solid fat as a shell layer is adopted innovatively in the present disclosure, which realizes the coating for liquid with high water content, and the variety of the liquid cores that can be coated is greatly increased. The prepared liquid center-filled composition can be widely applied to center-filled food to obtain different flavors and tastes, and have great commercial application prospects. Moreover, the liquid center-filled composition prepared according to the present disclosure has the advantages of high stability and being difficult to leak of the liquid core, so that long-distance transportation and long-time storage become feasible, thereby having great potential and practical significance.

### BRIEF DESCRIPTION OF THE DRAWINGS

Other features, objects, and advantages of the present disclosure will become more apparent by reading the detailed description of non-limiting embodiments with reference to the following drawings:
Fig. 1 is a schematic diagram of a process for preparing a liquid center-filled composition and a liquid center-filled chocolate including the same according to an embodiment of the present disclosure; and
Fig. 2 is a structural schematic diagram of a liquid center-filled chocolate prepared according to an embodiment of the present disclosure.

### DETAILED DESCRIPTION

The present invention is described in detail below in connection with specific embodiments. The following embodiments can facilitate a further understanding of the present disclosure by those skilled in the art, but do not limit the present disclosure in any form. It should be noted that several modifications and improvements can be made by those of ordinary skill in the art without departing from the concept of the present disclosure. All these modifications and improvements fall within the protection scope of the present invention.

The difficulties of the prior art, especially for center-filled chocolate, are to prepare chocolate encapsulating pure water or liquid with high water content (liquid with water content above 10%, such as tea, liquor, pure cream, milk, and fruit juice), meanwhile, structures of contents and an outer layer will not be damaged, and the flavor of the chocolate itself is maintained, so that a coating layer and the chocolate will not conflict in flavor and taste, and the chocolate can melt in the mouth immediately. In view of these difficulties, the inventors first tried a hydrogel layer produced by crosslinking reaction of sodium alginate and calcium ions. A water ball formed by the hydrogel layer can be obtained by adding calcium ions (generally calcium lactate) to the contents to be encapsulated and adding sodium alginate. The inventors have tested the hydrogel, and finally found that although the hydrogel may form the water ball, it has water permeability, hence moisture will slowly move out of the water ball when it is placed for a long time. At the same time, this substance is easy to decompose itself, making it an unstable filling layer.

Later, the inventors also tried to make layers with sodium alginate, gelatin powder and agar powder respectively in order to encapsulate high water content solution. At present, the research on such layers is very popular in academic circles, and many foreign start-up companies (such as Notpla) are trying to make edible layers with plastic strength from these materials. The inventors have used different methods and formulas to make them in many attempts. Although the contents with high water content may be encapsulated at the beginning, water cannot be encapsulated for a long time because of hydrophilic structures of these polysaccharide materials, like sodium alginate, and water will leak and the structures will break after a longer time, such that the effect of encapsulating water cannot be achieved (moisture may leak after being stored at room temperature for 7 days).

After many attempts, the inventors finally studied and discovered that solid fat (generally solid fat at normal temperature) can be used as an interlayer to separate the outer layer from the inner liquid. That is, a liquid center-filled composition is prepared by encapsulating the liquid with solid fat, and then a chocolate layer is encapsulated on the outside to obtain center-filled chocolate with high liquid content.

At room temperature, only a few kinds of fat can appear in the form of solid fat. Common vegetable oils exist as liquids, and only a few plant and animal oils exist as solid fat.

Although we often come into contact with solid fat in our daily life, we only use solid fat for cooking or seasoning, for example, butter for spreading bread, butter for cooking food (such as steak), lard for frying food, and the like. However, there is no food with solid fat as a filling layer in the market, so it is an innovative way to use solid fat as the filling layer. No one has thought of using solid fat as the filling layer before, and the inventors believe that the reasons are as follows:
1) The filling layer should appear in a stable state, which should not only have enough hardness and stability (such as sugar shell or gum filling), but also prevent liquid from flowing.
2) Even if oils and fats exist as solid fat, it is not always possible to make a stable filling. Although some solid fat is solid, it is a soft solid at room temperature. Once it bears weight, it is very easy to deform, which is not conducive to enclosing the contents and leads to leakage.
3) Although some solid fat has enough hardness at room temperature, its hardness is linearly proportional to temperature. Once the temperature rises, it will soften rapidly, which is more prone to leakage risk, which is not conducive to storage and transportation.
4) Generally, for ordinary people and professionals familiar with food science, oils and fats should be stored in a cool and dry environment, and contact with moisture, light, high temperature and air should be avoided as much as possible, because these factors will lead to rancidity of oils and fats, and hydrolysis rancidity caused by moisture will make oils and fats smell unpleasant and unpalatable. The present disclosure uses solid fat as the filling layer for encapsulating liquid, which will inevitably lead to long-term contact between solid fat and moisture. This usage scenario is contrary to the usual practice of avoiding contact between grease and moisture.

However, even if there is a solid fat satisfies the above structural conditions, it does not mean that the solid fat can encapsulate the contents with high water content. There are still many problems to be solved in its production and application:
1) Although it is common knowledge that oils and fats are insoluble in water, does solid fat and substances with high water content not react after long-term storage? Will the stability of center-filled structure of solid fat be weakened? Does it lead to rancidity of solid fat?
2) Are there problems like materials such as sodium alginate? That is, although the filling layer can encapsulate the contents, does water leak or evaporate from the filling layer?
3) Does solid fat have different reactions to materials with different water contents?
4) Is the hardness of solid fat suitable for long-term storage? Can it remain stable under temperature changes?
5) Does the thickness of solid fat layer affect the coating property? If it is too thick, does it affect the taste, and if it is too thin, does it leak?
6) Does solid fat have a strange taste in terms of food taste? For example, it takes a long time to melt in the mouth, resulting in wax feeling and graininess feeling.

It can be seen that the solid fat layer is used as the filling layer in an innovative form. Besides being unable to take the prior art as a reference, a lot of experiments and attempts are needed to confirm that the solid fat layer can stably encapsulate the contents with high water content, so as to confirm that the filling layer can achieve the stability of commercial use (such as long-term storage and sufficient hardness).

In order to find out the method of using solid fat as the filling layer, the inventors further selected the following solid fats which are rare at normal temperature for multiple tests to find out the best method of using solid fat as the filling layer. The inventors carried out melting test, hardness test and acid value test to screen out solid fat suitable for the filling layer.

### Melting Test:

To test whether the filling layer affects the taste of food, the inventors put solid fat at room temperature (25 °C) to simulate the general storage environment, and then put it in water at 37 °C to simulate the oral temperature of human body. Finally, the inventors calculated the time required to melt. Shorter time represented faster melting in the mouth, so that the filling layer has less influence on the taste. The contents of the experiment are as follows:
1) materials (solid fat): coconut oil, butter, high melting point palm oil (55°C), cacao butter replacer and/or cocoa butter replacer, non-tempered cacao butter and/or non-tempered cocoa butter, and tempered cacao butter and/or tempered cocoa butter.
2) taking out 1 gram of materials and storing at 25 °C.
3) adding this 1 gram of materials to water at 37°C.
4) starting measuring the melting time until the solid fat in the water is completely melted.
5) repeating steps 1) -4) three times and taking the average value.

Table 1 below shows the experimental results:

**Table 1**

| | **Coconut Oil** | **Butter** | **High Melting Point Palm Oil** | **Cacao Butter Replacer and/or Cocoa Butter Replacer** | **Non-tempered Cacao Butter and/or Cocoa Butter** | **Cacao Butter and/or Cocoa Butter** |
|---|---|---|---|---|---|---|
| **Time (second)** | <5 seconds mushy at 25 °C | 28.4 seconds | >10 minutes unable to melt, only soften into paste due to heat | >10 minutes unable to melt, only soften into mush due to heat | 40.31 seconds | 48.32 seconds |

In the above experiments, it can be seen that coconut oil, butter and cacao butter or cocoa butter can melt in 50 seconds, while high melting point palm oil, cacao butter replacer and cocoa butter replacer will only soften into mush.

It can be seen from the data that coconut oil, butter and cacao butter or cocoa butter can melt quickly at 37°C. In the actual environment, the surface area of food may be increased during chewing and stirred in the mouth, and the melting speed may be faster than that in the experiment.

Neither high melting point palm oil nor cacao butter replacer nor cocoa butter replacer can melt at 37°C, and both of them will become a mushy state in the mouth, and the resulting sticky sensation will decrease the texture of the food. Consumers can easily detect the existence of filling layer, and the sticky taste is not consistent with the taste of liquid contents.

From this experiment, it can be seen that coconut oil, butter, cacao butter and cocoa butter can melt at oral temperature, and the filling layer that can melt in the mouth immediately is an important condition for good food taste. In the above experiments, it can be seen that high melting point palm oil, cacao butter replacer and cocoa butter replacer can not provide good taste, and other types of solid fat are superior in melting test.

### Hardness Test:

In order to test whether solid fat can stably encapsulate the liquid of the contents, the inventors tested the hardness of different solid fat at different temperatures, in which Shore hardness tester is used to test the hardness of solid fat. Because the Shore hardness tester units are divided into A-type units and OO-type units (A-type is harder and OO-type is softer), and the hardness displayed by Shore units is not linear (for example, the hardness of 40HA and 80HA is not in a double relationship). Therefore after measuring Shore hardness, it is approximated to Young's modulus by formula in order to better compare the hardness of different solid fat. Under Young's modulus, we can know the dependence of deformation of a material on stress, and the unit of Young's modulus is also linear (it can be understood that the strength is twice when the value is doubled), which is convenient to make comparisons. The contents of the experiment are as follows:
Materials: preparing solid fat (coconut oil, butter, high melting point palm oil, cacao butter replacer and/or cocoa butter replacer, non-tempered cacao butter and/or non-tempered cocoa butter, and tempered cacao butter and/or tempered cocoa butter) and cutting it into a flat piece with a thickness of at least 12mm.
Test tools: Shore Hardness Tester A-type and Shore Hardness Tester OO-type
Experiment contents:
   1) cutting different solid fat into flat pieces each with a thickness of at least 12mm.
   2) adjusting the temperature of the solid fat to the corresponding experimental temperature as shown in Table 2 below.
   3) slowly pressing down on each flat piece with Shore Hardness Tester A-type (more than one second) and measuring its peak value, wherein Shore Hardness Tester OO-type is used for test when the hardness is too low.
   4) repeating steps 1) and 2) 5 times or more, each measuring point being not less than 6 mm away from the last measuring point.
   5) taking the average value of the measured peak values.
   6) converting to Young's modulus units.

Tables 2 and 3 below show the experimental results:

**Table 2**

| | **Coconut Oil** | **Butter** | **High Melting Point Palm Oil** | **Cacao Butter Replacer and/or Cocoa Butter Replacer** | **Cacao Butter and/or Cocoa Butter (non-tempered)** | **Cacao Butter and/or Cocoa Butter (tempered)** |
|---|---|---|---|---|---|---|
| **4**°C | 31.6 HA | 63 HOO | 38 HOO | 56.2 HA | 56 HA | 80.6 HA |
| **20**°C | 59.2 HOO | <1 HOO* | <1 HOO* | 23.6HA | 78.5 HOO | 58.4 HA |
| **23**°C | 23.6 HOO | <1 HOO* | <1 HOO* | 20HA | 65.4 HOO | 50.2 HA |
| **25**°C | <1 HOO* | <1 HOO* | <1 HOO* | 61.2 HOO | 44.6 HOO | 37.2 HA |
| **27**°C | <1 HOO* | <1 HOO* | <1 HOO* | 56.2 HOO | <1 HOO* | 29.6 HA |
| **30**°C | <1 HOO* | <1 HOO* | <1 HOO* | 50.6 HOO | <1 HOO* | 70.2HOO |

| | | | | | | |
|---|---|---|---|---|---|---|
| * indicates that solid fat has become paste, mushy or melted at corresponding temperature. Because the hardness is too low, the tester cannot measure the value. | | | | | | |

Table 3 below shows values in MPa approximately equal to Young's modulus:

**Table 3**

| | **Coconut Oil** | **Butter** | **High Melting Point Palm Oil** | **Cacao Butter Replacer and/or Cocoa Butter Replacer** | **Cacao Butter and/or Cocoa Butter (non-tempered)** | **Cacao Butter and/or Cocoa Butter (tempered)** |
|---|---|---|---|---|---|---|
| **4**°C | 1.00795 | 0.34095 | 0.05664 | 4.1949 | 4.14652 | 17.2717 |
| **20**°C | 0.25954 | <0.00398 | <0.00398 | 0.63322 | 1.03757 | 4.76582 |
| **23**°C | 0.02014 | <0.00398 | <0.00398 | 0.5139 | 0.40506 | 2.96201 |
| **25**°C | <0.00398 | <0.00398 | <0.00398 | 0.29961 | 0.09098 | 1.39357 |
| **27**°C | <0.00398 | <0.00398 | <0.00398 | 0.20924 | <0.00398 | 0.8967932 |
| **30**°C | <0.00398 | <0.00398 | <0.00398 | 0.13997 | <0.00398 | 0.571744 |

It can be seen from the above experimental data that solid fat has a good hardness value when it is refrigerated at 4°C, wherein tempered cacao butter and/or tempered cocoa butter, cacao butter replacer and/or cocoa butter replacer and non-tempered cacao butter and/or non-tempered cocoa butter are better.

It can be seen that the hardness of solid fat decreases when the experimental temperature rises to 20°C, wherein butter and high melting point palm oil become mush. Although it is not melted, the hardness cannot be measured. Tempered cacao butter or tempered cocoa butter has the highest hardness, which is 4-6 times higher than other types of solid fat.

When the experimental temperature rises to 25°C, the hardness of coconut oil cannot be measured. Tempered cacao butter or tempered cocoa butter still has the highest hardness, which is 4-6 times more than other types of solid fat.

When the experimental temperature rises to 27°C, the non-tempered cacao butter or non-tempered cocoa butter softens into paste, and the hardness cannot be measured. The hardness of tempered cacao butter or tempered cocoa butter is still about 4.5 times that of cacao butter replacer or cocoa butter replacer.

When the experimental temperature rises to 30°C, the coconut oil melts completely. Although butter, high melting point palm oil and non-tempered cacao butter or non-tempered cocoa butter are not melted, their hardness is not enough to be measured. At this time, only the hardness of cacao butter replacer or cocoa butter replacer and tempered cacao butter or tempered cocoa butter can be measured, and the hardness of tempered cacao butter or tempered cocoa butter is 4 times that of cacao butter replacer or cocoa butter replacer.

It can be seen from the above results that some solid fat is solid at normal temperature, but it appears in a very soft state, and its hardness is completely insufficient. Some solid fat has strong hardness at low temperature, but it soon becomes mush, paste or liquid when the temperature rises. However, as the filling layer, its thickness should be small enough to avoid affecting the overall taste of food. Therefore, solid fat must have enough hardness to bear the weight of the contents, and at the same time keep the hardness under reasonable temperature changes, so as to have enough stability in case of a thin solid fat layer and can be used for commercial purposes such as transportation and storage. In the experiment, it can be seen that the hardness of tempered cacao butter or tempered cocoa butter and cacao butter replacer or cocoa butter replacer is good at different temperatures, and can be kept good even at 30°C. The tempered cacao butter or the tempered cocoa butter is the best among the above solid fat, and the hardness thereof is more than 4 times of the hardness of cacao butter replacer or cocoa butter replacer at various temperatures. Tempered cacao butter or tempered cocoa butter has extremely good hardness even at 30°C near the melting point thereof, which shows that cacao butter or cocoa butter is the most preferred filling layer.

### Acid Value Test:

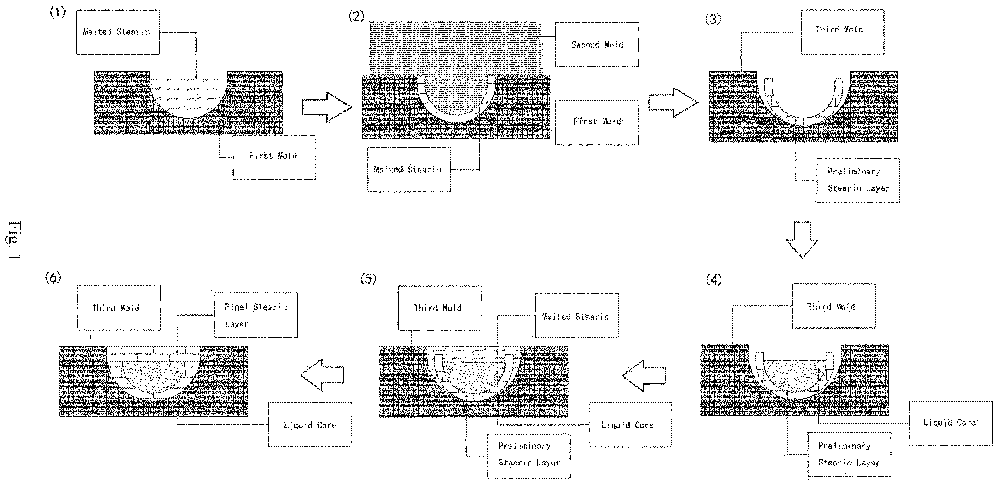

Under the cognition of ordinary people and food professionals, oils and fats should avoid contact with water as much as possible. Once oils and fats are left in the presence of water for a period of time, the fatty acid chain will be decomposed, such that unpleasant smell and unpalatable taste may be generated. When there are other impurities in the water, such as trace metal elements or microorganisms, this process may be accelerated. Previous studies by other people have focused on the rancidity of oils and fats under frying, for example, rancidity at high temperature (about 150°C) and low water amount (about 1% of oils and fats), but there is no research on solid fat stability under normal temperature and high water amount for a long time. Since the solid fat filling layer according to the present disclosure needs to contact with water for a long time, it is necessary to test whether the solid fat undergoes hydrolytic rancidity due to long-term contact with water, and the degree of hydrolytic rancidity can be obtained by detecting the acid value of the solid fat. If the acid value is higher than that when it is not in contact with water, it means that solid fat is rancid. Based on the previous two experiments, it can be seen that cacao butter or cocoa butter and cacao butter replacer or cocoa butter replacer are better solid fat as the filling layer, so the experiment will focus on the stability of cacao butter,cocoa butter, cacao butter replacer and cocoa butter replacer. The contents of the experiment are as follows:
Materials: the filling layer is made by cacao butter and/or cocoa butter and cacao butter replacer and/or cocoa butter replacer (referring to Fig. 1 for the manufacturing process), in which different liquid contents are contained.

Experiment contents: after the filling layer containing contents is placed at room temperature for three months, the filling layer is made melted, and then the acid value of the filling layer is tested.

Table 4 below shows the experimental results:

**Table 4**

| **Contents / Filling layer** | **Cacao Butter and/or Cocoa Butter** | **Cacao Butter Replacer and/or Cocoa Butter Replacer** |
|---|---|---|
| **No Contents** | 1.5 KOH | 0.3 KOH |
| **Water** | 1.5 KOH | 0.3 KOH |
| **Tea** | 1.5 KOH | 1.5 KOH |
| **Cream** | 1.5 KOH | 1.0 KOH |

It can be seen that cacao butter or cocoa butter is very stable with different contents, and can be stored stably for three months with the same acid value in different contents. Cacao butter replacer or cocoa butter replacer is stable in water, however its stability in tea and cream becomes lower.

It should be noted that although the acid value of cacao butter or cocoa butter is similar to the changed acid value of cacao butter replacer or cocoa butter replacer, the initial acid value of each of oils and fats is different. Generally, refined oils and fats have lower acid value, while natural oils and fats generally have higher acid value. This experiment mainly observes the change of acid value instead of absolute value, and observes whether solid fat may deteriorate under the condition of high water amount through the change of acid value.

It is deemed that the reason why the two types of solid fat can be stored in a high water environment and their acid value is still stable is that they have more saturated fats than ordinary liquid oils and fats, such that they are difficult to be oxidized during storage. Natural cacao butter or cocoa butter itself contains antioxidants, so that it is more antibacterial and less prone to deterioration than other oils and fats. In contrast, solid fat such as cacao butter replacer or cocoa butter replacer and high melting point palm oil has been refined, and its natural antioxidants have been lost in the process, so that it is easier to deteriorate than cacao butter or cocoa butter.

It should be noted that the result of acid value of solid fat is about 1.5 KOH, which is healthier and safer than the national standard values of liquid edible oil of 3 KOH, vegetable oil of 4 KOH and pastry of 5 KOH. It can be seen that the two types of solid fat coating the contents are stable, and are not easy to deteriorate under the influence of the contents, so that they can be stored for a long time. From the experimental data, cacao butter or cocoa butter is more stable than cacao butter replacer or cocoa butter replacer, so cacao butter or cocoa butter is more superior as the filling layer.

Based on the above preliminary experimental results, the detailed experimental schemes in the following examples are further carried out.

### Embodiment 1

In the embodiment, different types of solid fat are used to prepare solid fat layers, and the preparation method included the following steps: pouring each melted solid fat into a mold for preparing the filling layers, and solidifying to obtain each filling layer. Wherein non-tempered cacao butter or non-tempered cocoa butter is conventional natural cacao butter or cocoa butter and the biggest difference between natural cacao butter or cocoa butter and other oils and fats in use is the crystallization of cacao butter or cocoa butter. Generally, no matter the oils and fats are heated or cooled quickly or slowly at different temperatures, they may generate the same liquid oil and solid fat when reaching the melting point or freezing point. However, during the process from melting to cooling, cacao butter and/or cocoa butter can produce several types of crystals at different temperatures and speeds, and the characteristics of each type of crystals are different. Table 5 below shows various crystals and characteristics of cacao butter and/or cocoa butter.

**Table 5**

| | **Characteristics** | **Melting point** |
|---|---|---|
| **Gamma crystal** | The crystal that appears only in theory may become Alpha crystal after a few seconds, and can be ignored. | |
| **Alpha I crystal** | It appears when cacao butter and/or cocoa cutter is rapidly frozen, is structurally unstable, fragile and has a low melting point. | 16-18 °C |
| **Alpha II crystal** | It appears when cacao butter and/or cocoa butter is rapidly frozen at a speed of two degrees per minute, is structurally unstable but better than Alpha I crystal, fragile and has a low melting point. | 22-24 °C |
| **Beta'I crystal** | It appears in melt liquid of cacao butter and/or cocoa butter when the temperature drops slowly, and is more stable than Alpha crystal. | 25-26 °C |
| **Beta'II crystal** | It appears in melt liquid of cacao butter and/or cocoa butter when the temperature drops slowly, and is more stable than Beta'I crystal. It has graininess and insufficient hardness, and is fragile. | 27-29 °C |
| **Beta I crystal** | The desired crystal after tempering. It is more stable than Alpha crystal and Beta' crystal, with sufficient hardness, crispness and high melting point. | 33.5-35 °C |
| **Beta II crystal** | It is the most stable structure and cannot be obtained directly. It is gradually formed when Beta I crystal is left at room temperature for more than one month. It has the highest hardness and melting point. | 36-38 °C |

According to the forming timing of the crystals in the above table, alpha crystal appears when cacao butter and/or cocoa butter is melted and quickly frozen until condensation. If it is directly placed at 20-22°C after melting, both alpha crystal and beta' crystal may appear in cacao butter and/or cocoa butter, causing confusion in the crystallization of cacao butter and/or cocoa butter. Although other types of structures may gradually transform into Beta 'II type, it takes a long time (about 24 hours). Moreover, it is not stable enough and the taste is poor.

In order to make Beta I crystal which is stable and has good taste, it is necessary to carry out tempering. The process includes heating cacao butter and/or cocoa butter to 45 °C to melt all crystals. Then the temperature is lowered to 27°C to start crystallization, and finally it is heated to about 32°C to melt the Beta 'II crystal, leaving the Beta I crystal in the cacao butter and/or cocoa butter. Then it is placed at 20-22°C, and a large number of Beta I crystal allows amorphous molecules in cacao butter and/or cocoa butter to be transformed into Beta I crystal rapidly. Generally, a hard shell may be formed within 2 hours.

In this regard, a specific preparation method for obtaining tempered cacao butter and/or cocoa butter includes:
1) putting the natural cacao butter and/or cocoa butter into a plastic bag, then putting the plastic bag into water, and melting the natural cacao butter and/or cocoa butter into a liquid at 45.5°C;
2) slowly decreasing the temperature (10-15 minutes) to 27°C when there is no solid cacao butter and/or cocoa butter in the bag;
3) slowly increasing the temperature (10-15 minutes) to 32°C for use.
4) producing the solid fat layer through the steps as shown in Fig. 1 using tempered cacao butter and/or tempered cocoa butter.

In the actual manufacturing process, problems that do not occur in other filling layers occur when preparing the filling layer of cacao butter and/or cocoa butter, which are described as below.

Taking the method of making dark chocolate shell or sugar shell as an example: the general method includes filling a mold and turning the mold over 180 degrees, so that dark chocolate is hung on the mold. However, according to the inventors' experiments and tests, pure oils and fats are not suitable for this method. The reason is that there is cocoa in dark chocolate, and the fluidity of cocoa decreases as its content is higher, so that dark chocolate can be hung on the mold when poured out. Melted sugar has high viscosity and low fluidity, so it can also be hung on the mold. However, pure pure oils and fats have high fluidity. If they are poured out by this method, the oils and fats with high fluidity will be completely poured out and will not be hung on the mold. Another method includes injecting materials into a pre-refrigerated mold, so that the materials condense into a thin shell on a surface of the mold. However, cacao butter and/or cocoa butter cannot be rapidly solidified by this method, because the rapid condensation of cacao butter and/or cocoa butter will produce unstable Alpha crystal in it, and thus producing the unstable filling layer, which is not conducive to taste and preservation.

At the same time, in the market, the top of the filling layer is sealed directly after adding the contents, and thus producing a complete filling layer. However, this method cannot be used when cacao butter and/or cocoa butter is used, because cacao butter and/or cocoa butter may shrink during crystallization from liquid to solid. If only the top is filled, the top seal may not be sealed due to shrinkage after solidification, and cracks may appear. In the inventors' experiments, such cracks expose the contents to the external environment, resulting in evaporation and leakage of the contents. In order to solve these problems, the inventors have also conducted many experiments and tests. Finally, the problem of cracks can be successfully solved by the manufacturing method of the solid fat layer according to the present disclosure, and a stable and complete filling layer made by cacao butter and/or cocoa butter has been successfully manufactured.

Table 6 below shows an analysis of the characteristics of solid fat layers prepared by different types of solid fat.

**Table 6**

| **Solid fat type** | **Coconut Oil** | **Butter (e.g., beef tallow and margarine)** | **High Melting Point Palm Oil** | **Cacao Butter Replacer and/or Cocoa Butter Replacer** | **Cacao Butter and/or Cocoa Butter (non-tempered)** | **Cacao Butter and/or Cocoa Butter (tempered)** |
|---|---|---|---|---|---|---|
| **Advantages and disadvantage s of solid fat layer** | Coconut oil has a unique coconut flavor, but its melting point is low and it is easy to soften and melt at room temperature When using coconut oil for coating, it is very easy for the liquid fillings to leak out. | Butter has a higher melting point than coconut oil. Although it is not easy to melt at room temperature, it has insufficient hardness and is not stable enough when the temperature rises. The solid fat layer may be damaged in case of impact or heavy contents. | Although its melting point is the highest among solid fat in the table, it cannot be melted in the mouth. Hardness is insufficient at various temperatures . The solid fat layer may be damaged in case of impact or heavy contents. | Its melting point is lower than that of high melting point palm oil, and it is more suitable for the filling layer than coconut oil/animal oil and high melting point palm oil. It is easy to preserve and stable, and has proper hardness. But the taste is not good, and it can't melt in the mouth, similar to wax. | Its melting point is higher than that of coconut oil, but it is not stable enough. Its hardness is lower than that of cacao butter and/or cocoa butter, and hardness varies greatly as the temperature changes. The speed of crystallizatio n is slow and it is easy to break. The taste is granular, which is not ideal enough. | Its melting point is similar to human body temperature, and the taste is crisp. It is easy to melt in the mouth. It has high hardness at normal temperature and can effectively separate the contents and outer layer. Natural cacao butter and/or cocoa butter is even better fat. |

It can be seen from the above experimental results that after many tests, butter, coconut oil and non-tempered cacao butter and/or non- tempered cocoa butter have insufficient hardness and insufficient stability at different temperatures, which is not the best choice for manufacturing the filling layer. The hardness of cacao butter replacer and/or cocoa butter replacer is higher than that of other types of solid fat, but the taste is not good enough and the acid value stability is not as good as cacao butter and/or cocoa butter. As a result, after testing, the best solid fat filling layer is tempered cacao butter and/or tempered cocoa butter, and its advantages are as follows:
1) Its hardness is high at room temperature, and no leakage occurs after coating.
2) Its hardness is not linearly proportional to temperature. Generally, the hardness of solid fat and grease will soften when the temperature rises. The solid fat layer made at room temperature is prone to leakage when it becomes soft due to an increase in temperature. However, the difference of tempered cacao butter and/or tempered cocoa butter is that cacao butter and/or cocoa butter may generate strong crystals under tempering, so that its hardness only changes slightly when the temperature rises, and it melts rapidly only when it is close to the melting point. Thus, as long as cacao butter and/or cocoa butter is not placed under a temperature near the melting point, its stability is very high.
3) Natural cacao butter and/or cocoa butter itself contains antioxidants, and it is not easy to rancid and deteriorate even if it encapsulates liquid contents.
4) Cacao butter replacer and/or cocoa butter replacer also has the advantages of high hardness and not easy to leak when temperature changes, but it is not as good as tempered cacao butter and/or tempered cocoa butter in flavor. Cacao butter and/or cocoa butter can completely melt in a short time at the temperature of human mouth, especially after tempering cacao butter and/or cocoa butter layer becomes crisp, giving the tongue of human a silky and smooth taste enjoyment. At the same time, the present disclosure also includes adding oily edible natural pigment (such as adding brown pigment) into the cacao butter and/or cocoa butter filling layer, so that the eater cannot even distinguish the existence of the middle cacao butter and/or cocoa butter layer, thus giving the eater a better taste experience. The high melting point of cacao butter replacer and/or cocoa butter replacer leads to waxy taste, which leads to taste problems.

### Embodiment 2

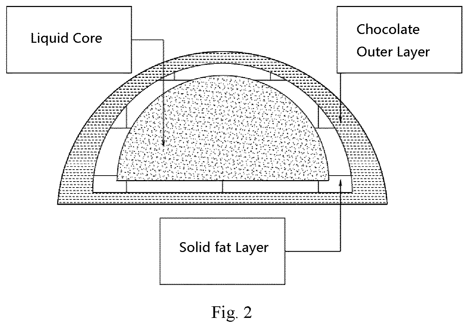

The embodiment provides a preparation method of liquid center-filled chocolate, which includes a chocolate outer layer and a liquid center-filled composition. The schematic diagram of the preparation process is shown in Fig. 1, and the specific preparation method is as follows:
1) Preparation of experimental raw materials: tempered cacao butter and/or tempered cocoa butter obtained by adjusting the temperature of pure natural cacao butter and/or cocoa butter is used as the material of a solid fat layer, water, fresh milk (about 90% water content), cream (about 60% water content) and high-concentration liquor (about 35% water content) are used as the liquid core materials enclosed in the solid fat layer, and 70% pure dark chocolate is used as the material of the chocolate outer layer.
2) Preparation of molds: three molds are adopted, that is, a first mold and a second mold for preparing a preliminary solid fat layer, and a third mold for preparing a final solid fat layer. The size of the third mold is slightly larger than that of the first mold. The first mold has a first concave structure, the second mold has a first convex structure, the first convex structure of the second mold can be fitted in the first concave structure, and a cavity is provided between the first convex structure and the first concave structure. The cavity is used for forming a first solid fat layer. The shell mold included the third mold, which has a second concave structure. The size of the second concave structure is larger than that of the first concave structure, and the second concave structure is used for putting the prepared first solid fat layer into the second concave structure. Another solid fat layer can be further formed outside the first solid fat layer and integrated with the first solid fat layer to form a final solid fat layer.
3) Preparation of tempered cacao butter and/or tempered cocoa butter: melt liquid of tempered cacao butter and/or tempered cocoa butter is obtained by the same method as in Embodiment 1.
4) Preparation of the preliminary solid fat layer: tempered cacao butter and/or tempered cocoa butter is injected into the first mold (as shown in Fig. 1-1) and the second mold is placed above for forming the concave tempered cacao butter and/or tempered cocoa butter (as shown in Fig. 1-2). Then, it is placed at 20-22°C for 2 hours, and the preliminary solid fat layer is formed after coagulation.
5) Filling of liquid core: after the preliminary solid fat layer is removed (slightly heated if necessary) from the mold, it is placed in the third mold (as shown in Fig. 1-3), and then the liquid core (water, fresh milk, cream and high-concentration liquor) to be encapsulated is injected into the preliminary solid fat layer respectively until it is four fifths full (as shown in Fig. 1-4).
6) Preparation of the final solid fat layer: the third mold is filled with melt liquid of the tempered cacao butter and/or tempered cocoa butter, which is filled in outside and the remaining fifth of the interior of the preliminary solid fat layer (as shown in Fig. 1-5), and it is placed at 20-22°C for 2 hours to coagulate, so that the newly injected melt liquid of tempered cacao butter and/or tempered cocoa butter is integrated with the preliminary solid fat layer, thus realizing the encapsulation of the liquid core in the solid fat layer. In the inventors' previous experiments, it is found that cacao butter and/or cocoa butter will shrink during crystallization due to tempering. If only the preliminary solid fat layer is injected into the liquid core until the top is filled, it will not be sealed due to shrinkage after crystallization and solidification, thus causing evaporation and leakage of the contents. The method according to the embodiment perfectly solved the problem of possible leakage of the liquid core by placing the preliminary solid fat layer into the slightly larger third mold and filling the top space and the outside of the preliminary solid fat layer with tempered cacao butter and/or tempered cocoa butter. Moreover, because the density of the liquid core is higher than that of the melt liquid of the tempered cacao butter and/or tempered cocoa butter, they are delaminated, and the final solid fat layer is formed after the melt liquid of the tempered cacao butter and/or tempered cocoa butter cooled and solidified, thus forming a center-filled structure, as shown in Fig. 1-6.
7) Preparation of a chocolate shell: 70% pure dark chocolate is melted first, and the obtained melt liquid of chocolate is completely covered on the final solid fat layer, thus obtaining center-filled chocolate containing various liquid cores, as shown in Fig. 2.

### Embodiment 3

The embodiment provides a preparation method of liquid center-filled chocolate, which includes a chocolate outer layer and a liquid center-filled composition, and the specific preparation method is as follows:
1) Preparation of experimental raw materials: pure natural cacao butter and/or cocoa butter (non-tempered) is used as the material of a solid fat layer, water, fresh milk (about 90% water content), cream (about 60% water content) and high-concentration liquor (about 35% water content) are used as the liquid core materials enclosed in the solid fat layer, and 70% pure dark chocolate is used as the material of the chocolate outer layer.
2) Preparation of molds: three molds are adopted, that is, a first mold and a second mold for preparing a preliminary solid fat layer, and a third mold for preparing a final solid fat layer. The size of the third mold is slightly larger than that of the first mold.
3) Preparation of the preliminary solid fat layer: natural cacao butter and/or cocoa butter (non-tempered) is put into a plastic bag, and then the plastic bag is put into water to melt at 45.5°C to obtain melt liquid of cacao butter and/or cocoa butter; and the melt liquid of the cacao butter and/or cocoa butter is injected into the first mold, and the second mold is placed above for forming the concave the natural cacao butter and/or cocoa butter. Then, it is placed at 20-22°C for 2 hours, and the concave preliminary solid fat layer is formed after coagulation.
4) Filling of liquid core: after the preliminary solid fat layer is removed (slightly heated if necessary) from the mold, it is placed in the third mold, and then the liquid core (water, fresh milk, cream and high-concentration liquor) to be encapsulated is injected into the preliminary solid fat layer respectively until it is four fifths full.
5) Preparation of the final solid fat layer: the third mold is filled with the melt liquid of the melted cacao butter and/or the melted cocoa butter, which is filled in outside and the remaining fifth of the interior of the preliminary solid fat layer, and it is placed at 20-22°C for 2 hours to coagulate, so that the newly injected melt liquid of cacao butter and/or cocoa butter is integrated with the preliminary solid fat layer, thus realizing the encapsulation of the liquid core in the solid fat layer and finally forming a center-filled structure.
6) Preparation of a chocolate shell: 70% pure dark chocolate is melted first, and the obtained melted liquid of chocolate is completely covered on the final solid fat layer, thus obtaining center-filled chocolate containing various liquid cores.

### Embodiment 4

The embodiment provides a preparation method of liquid center-filled chocolate, which includes a chocolate outer layer and a liquid center-filled composition, and the specific preparation method is as follows:
1) Preparation of experimental materials: cacao butter replacer and/or cocoa butter replacer is used as the material of a solid fat layer, water, fresh milk (about 90% water content), cream (about 60% water content) and high-concentration liquor (about 35% water content) are used as the liquid core materials enclosed in the solid fat layer, and 70% pure dark chocolate is used as the material of the chocolate outer layer.
2) Preparation of molds: two molds are adopted, that is, a first mold and a second mold for preparing a preliminary solid fat layer.
3) Preparation of the preliminary solid fat layer: cacao butter replacer and/or cocoa butter replacer is put into a plastic bag, and then the plastic bag is put into water to melt at 45.5°C to obtain melted liquid of cacao butter replacer and/or cocoa butter replacer; and the melted liquid of the cacao butter replacer and/or cocoa butter replacer is injected into the first mold, and the second mold is placed above for forming the concave cacao butter replacer and/or cocoa butter replacer. Then, it is placed at 20-22°C for 2 hours, and the concave preliminary solid fat layer is formed after coagulation.
4) Filling of liquid core: the liquid core (water, fresh milk, cream and high-concentration liquor) to be encapsulated is injected into the preliminary solid fat layer respectively until it is four fifths full.
5) Preparation of the final solid fat layer: the melted liquid of cacao butter replacer and/or cocoa butter replacer is injected above the liquid core, so that it is filled in the remaining fifth of the interior of the preliminary solid fat layer, and it is placed at 20-22°C for 2 hours to coagulate, so that the newly injected melted liquid of cacao butter replacer and/or cocoa butter replacer is integrated with the preliminary solid fat layer, thus realizing the encapsulation of the liquid core in the solid fat layer and finally forming a center-filled structure.
6) Preparation of a chocolate shell: 70% pure dark chocolate is melted first, and the obtained melted liquid of chocolate is completely covered on the final solid fat layer, thus obtaining center-filled chocolate containing various liquid cores.

### Comparative Example 1

The comparative example provides a preparation method of liquid center-filled chocolate, which includes a chocolate outer layer and a liquid center-filled composition, and the specific preparation method is as follows:
1) Preparation of experimental raw materials: 70% pure dark chocolate and chocolate with a thickness of 3-5mm are used as raw materials for the chocolate outer layer, and water, fresh milk (about 90% water content), cream (about 60% water content) and high-concentration liquor (about 35% water content) are used as the liquid core materials enclosed in the solid fat layer.
2) Preparation of chocolate: chocolate is heated to melt.
3) Preparation of a first shell of chocolate: an existing mold for preparing the chocolate layer is adopted, the tempered chocolate is poured into the mold, and then the mold is turned over 180 degrees, so that the chocolate that is not stuck on the mold will drip, and a layer of dark chocolate hanging in the mold remained, and then it is placed at 20-22°C for 2 hours to coagulate, so as to obtain the first shell of chocolate.
4) Filling of liquid core: the liquid core (water, fresh milk, cream and high-concentration liquor) to be encapsulated is injected into the first shell of chocolate respectively until it is four fifths full.
5) Preparation of a second shell of chocolate: a chocolate sheet with a thickness of 3-5mm is cut into a shape and size that can seal the top of the first shell of chocolate, one surface of the chocolate is slightly melted with a metal sheet at a temperature of 45 °C (i.e., the metal sheet is placed on the surface of the chocolate sheet for 3-10 seconds), then a cover chocolate sheet is placed on the top of the first shell of chocolate so that the melted surface is connected with the first shell of chocolate, and then it is placed at 20-22°C for 2 hours to coagulate, to obtain the center-filled chocolate with various liquid cores without solid fat layer.

Each of the center-filled chocolates prepared in the above Embodiments 2-3 and Comparative Embodiment 1 is placed at room temperature for 24 hours, and then the combined cross-sections are observed. Specifically, changes of the hard shell are observed and tastes are checked.

Wherein the taste score is from 1 to 10, in which 1 represented the worst taste and 10 represented the best taste. 50 participants are summoned to taste foods made of different filling layers, so as to score the taste of filling layers. Finally, the scores of each product are averaged, in which:
Score of 1-3 represented poor taste. The filling has obvious agglomeration feeling, strange taste and is difficult to enter to the mouth.
Score of 4-7 represented mean taste. Although there is no obvious agglomeration feeling, it can still be felt that the filling layer is difficult to melt in the mouth.
Score of 8-10 represented good taste. The filling layer can be well integrated with the interior and outer layers of chocolate, without obvious feeling of the existence of filling layer.

The experimental results are shown in Table 7 below.

**Table 7**

| **Contents and Water Content%** | **No solid fat layer (Comparative Embodiment 1)** | **Cacao Butter Replacer and/or Cocoa Butter Replacer solid fat layer (Embodiment 4)** | **Cacao Butter and/or Cocoa Butter (non-tempered) solid fat layer (Embodiment 3)** | **Cacao Butter and/or Cocoa Butter (tempered) solid fat layer (Embodiment 2)** |
|---|---|---|---|---|
| **Water (100%)** | Water reacted with chocolate, water turned brown, and the taste of water is polluted by the chocolate outer layer. | Cacao butter replacer and/or cocoa butter replacer filling layer has a clear boundary and no trace of erosion. | Cacao butter and/or cocoa butter filling layer has a clear boundary and no trace of erosion. | Cacao butter and/or cocoa butter filling layer has a clear boundary and no trace of erosion. |
| | The inner chocolate is eroded and agglomerated, and the boundary is blurred. | | | There is no reaction between the contents and the outer layer. |
| | | There is no reaction between the contents and the outer layer. | There is no reaction between the contents and the outer layer. | |
| | Taste score: 1.8 | | | Taste score: 8.8 |
| | | Taste score: 6.6 | Taste score: 6.6 | |
| Fresh milk (~**90%**) | Milk and chocolate reacted, milk became chocolate milk color, and taste of milk is affected and polluted by the chocolate outer layer. | Cacao butter replacer and/or cocoa butter replacer filling layer has a clear boundary and no trace of erosion. | Cacao butter and/or cocoa butter filling layer has a clear boundary and no trace of erosion. | Cacao butter and/or cocoa butter filling layer has a clear boundary and no trace of erosion. |
| | The inner chocolate is eroded and agglomerated, and the boundary is blurred. | | | There is no reaction between the contents and the outer layer. |
| | | There is no reaction between the contents and the outer layer. | There is no reaction between the contents and the outer layer. | |
| | Taste score: 2.3 | | | Taste score: 9.6 |
| | | Taste score: 7.8 | Taste score: 7.0 | |
| cream ( ~ **60%**) | The cream and chocolate reacted. The cream hardens and the color became slightly darker. The taste of cream is polluted by the chocolate outer layer, and the taste became worse. | Cacao butter replacer and/or cocoa butter replacer filling layer has a clear boundary and no trace of erosion. | Cacao butter and/or cocoa butter filling layer has a clear boundary and no trace of erosion. | Cacao butter and/or cocoa butter filling layer has a clear boundary and no trace of erosion. |
| | | | There is no reaction between the contents and the outer layer. | There is no reaction between the contents and the outer layer. |
| | | There is no reaction between the contents and the outer layer. | | |
| | The inner chocolate is eroded and agglomerated, and the boundary is blurred. | | | |
| | | | | Taste score: 9.4 |
| | But the erosion trace is smaller than that of water and milk. | Taste score: 7.5 | Taste score: 7.2 | |
| | Taste score: 2.4 | | | |
| high-concentration liquor ( ~ **35%**) | Liquor and chocolate are observed to have a certain degree of reaction. The color of the liquor is slightly cloudy. | Cacao butter replacer and/or cocoa cutter replacer filling layer has a clear boundary and no trace of erosion. | Cacao butter and/or cocoa butter filling layer has a clear boundary and no trace of erosion. | Cacao butter and/or cocoa butter filling layer has a clear boundary and no trace of erosion. |
| | The inner chocolate is eroded (degree of erosion is slightly less than water/milk/cream). | | There is no reaction between the contents and the outer layer. | There is no reaction between the contents and the outer layer. |
| | | There is no reaction between the contents and the outer layer. | | |
| | | | | Taste score: 8.7 |
| | Taste score: 2.8 | | | |
| | | Taste score: 7.5 | Taste score: 7.2 | |

From the above test results, it can be seen that the experiment in Comparative Example 1 verified the influence of water content on chocolate as described above, and erosion is more serious as water content is higher. At the same time, it explained why liquor-filled chocolate in the market needed to be added with a lot of sugar, and sugar shell products needed to use water-in-oil emulsion to minimize water content.

From the above test results, it can be seen that solid fat has excellent protection under different water contents. More importantly, solid fat separates the chocolate from the liquid in the filling, thus protecting the structure of the chocolate shell from being destroyed, and the moisture in the filling layer cannot leak into the outer layer at all. The flavor of chocolate will not be affected by liquid with high water content at all. According to the above results, the solid fat layer prepared by tempered cacao butter and/or tempered cocoa butter has the best taste.

### Embodiment 5

The present embodiment provides a preparation method of a liquid center-filled composition. The specific steps refer to the steps in the above Embodiments 2-4, and the liquid center-filled compositions including cacao butter replacer and/or cocoa butter replacer, cacao butter and/or cocoa butter (non-tempered) and cacao butter and/or cocoa butter (tempered) as materials of the solid fat layer and water (100% water content) as the liquid core are respectively prepared. They are placed at room temperature for different periods (1 week, 2 weeks, 4 weeks, 2 months and 3 months), and their weight changes are observed. The solid fat layers are cut to observe the contents, the cross sections of the liquid core and the outer shell. The weight change results are shown in Table 8, and the weight pound error used in weight measurement is +/-0.1 g.

**Table 8**

| **Materials of solid fat layer / Weight** | **Initial Weight** | **1 week** | **2 weeks** | **4 weeks** | **2 months** | **3 months** |
|---|---|---|---|---|---|---|
| **Cacao Butter Replacer and/or Cocoa Butter Replacer** | 11 g | 11 g | 11 g | 11 g | 11 g | 11 g |
| **Cacao Butter and/or Cocoa Butter (non-tempered)** | 11.4 g | 11.4 g | 11.4 g | 11.4 g | 11.4 g | 11.4 g |
| **Cacao Butter and/or Cocoa Butter (tempered)** | 11.9 g | 11.9 g | 11.9 g | 11.9 g | 11.9 g | 11.9 g |

After each solid fat layer is cut open, water is clear and transparent, and the solid fat layers made of cacao butter replacer and/or cocoa butter replacer, non-tempered cacao butter and/or non-tempered cocoa butter and tempered cacao butter and/or tempered cocoa butter has no trace of erosion. Also, the inner surface of each solid fat layer is smooth, and there are almost no water spots or moisture adhered on it.

From the above experiments, it can be known that the protective layer of solid fat is very hydrophobic, and it does not react with water during the 3-month experimental period. At the same time, it effectively blocks the contents and the outer layer, and water does not lose or evaporate (if there is loss, moisture should be observed on the surface, and if there is evaporation, the weight loss should be observed). During the experimental observation period, the weight is almost unchanged (the maximum weight change is no more than 0.5% of the total weight based on the weight error of 0.1 g). Further, from the previous understanding of cacao butter and/or cocoa butter, theoretically speaking, cacao butter and/or cocoa butter will gradually become a more stable structure within one month at room temperature. Thus, it can be presumed that solid fat layer can protect the contents and outer layer in a reasonable product cycle and the food will not deteriorate even if it is placed on the shelf for a long time.

### Embodiment 6

The present embodiment adopted the same method as that described in Embodiment 5, to respectively prepare liquid center-filled compositions including cacao butter replacer and/or cocoa butter replacer, cacao butter and/or cocoa butter (non-tempered) and cacao butter and/or cocoa butter (tempered) as materials of the solid fat layer and water (100% water content) as the liquid core. The solid fat layer has different thicknesses, and the stability of the center-filled compositions is tested.

The purpose of the embodiment is to test whether different thicknesses of the solid fat layer would affect the protective effect of the composition. Generally speaking, the higher the thickness, the slower the melting speed in consumers' mouths, and the greater the impact on taste. Therefore, it is desired to observe the influence of thickness on protection effect through experiments and find the best embodiment.

The prepared liquid center-filled compositions with different thicknesses of the solid fat layer are placed at room temperature for 1 month, and then the weight changes are observed. The solid fat layers are cut to observe the contents, the cross sections of the liquid core and the outer shell. The weight change results are shown in Table 9, and the weight pound error used in weight measurement is +/-0.1 g.

**Table 9**

| **Materials of solid fat layer / Thickness** | **0.05mm-0.15mm** | **0.15mm-0.25mm** | **0.25mm-0.35mm** |
|---|---|---|---|
| **Cacao Butter Replacer and/or Cocoa Butter Replacer** | The change is less than 0.5% (0.1 g) | The change is less than 0.5% (0.1 g) | The change is less than 0.5% (0.1 g) |
| **Cacao Butter and/or Cocoa Butter (non-tempered)** | The change is less than 0.5% (0.1 g) | The change is less than 0.5% (0.1 g) | The change is less than 0.5% (0.1 g) |
| **Cacao Butter and/or Cocoa Butter (tempered)** | The change is less than 0.5% (0.1 g) | The change is less than 0.5% (0.1 g) | The change is less than 0.5% (0.1 g) |

After each center-filled composition is opened, water is clear and transparent, and the solid fat layers with various thicknesses made of cacao butter replacer and/or cocoa butter replacer, non-tempered cacao butter and/or non- tempered cocoa butter and tempered cacao butter and/or tempered cocoa butter have no trace of erosion. Also, the inner surface of each solid fat layer is smooth, and there are almost no water spots or moisture adhered on it.

From the above experimental results, it can be concluded that the protective effect of solid fat layer is stable, and the correlation between the solid fat layer's protective effectiveness and its thickness is not high in the absence of damage. As a result, as long as the solid fat layer is not damaged, it can theoretically exist in a very thin form. When the filling layer is thin, it is even difficult for consumers to detect the existence of the filling layer. Producers can produce the filling with different thicknesses as required to make different tastes and flavors.

In summary, the liquid center-filled composition prepared according to the present disclosure is a more innovative, effective and superior product than the existing products, and solves the defects of the existing center-filled products. It is superior to the existing Ganache, liquor-filled sugar shell and gum layer filling in the market mentioned at the beginning of the document. Its practicability is excellent due to high stability, and it can be stored on the shelf for a long time. There is no conflict between the solid fat layer and chocolate in flavor and taste, it can melt in the mouth immediately, and the tempered cacao butter and/or tempered cocoa butter layer is crisp, giving the tongue a taste enjoyment that is a silky and smooth and turned to water in the mouth. The present disclosure further includes adding oily edible natural pigment into the cacao butter and/or the cocoa butter layer, for example, adding brown pigment, so that the eater cannot even distinguish the existence of the middle cacao butter and/or cocoa butter layer, giving the eater a better taste experience. At the same time, it has a longer shelf life (i.e., a longer storage life), which ensures that the materials are natural and the chemicals and sugar are reduced or even not used.

The outer layer covering the liquid center-filled composition prepared by the method according to the present disclosure may also be an outer layer used for the preparation of materials with strong water absorption such as bread, cake or biscuit. Manufacturers may use the process to produce the filling layer with stable quality, good taste and healthy materials, which may be used in different products, such as liquid center-filled chocolate.

According to the method in the above embodiments, many substances with high water content (tea, liquor, fruit juice, and the like) which could not be put together with chocolate can be put together now by the method. The diversity and innovation of chocolate taste will be increased. The unique and innovative method of using solid fat as the filling layer can avoid the defects of existing methods:
1) The existing chocolate with soft fillings in the market is improved: after adding solid fat layer between the chocolate shell and the filling, the with soft fillings may be processed in a richer and more diverse way. For example, milk, cream and other substances may be added to the with soft fillings to make the with soft fillings diluent, so that chocolate can have the effect of fluid filling instead of just soft fillings, thereby giving taste buds more experience.
2) The contents do not need to be added with a large amount of syrup and sugar, and do not need to be made into water-in-oil emulsion, such that the flavor of the contents can be maintained and the contents become healthier.
3) The filling layer can be eaten and melted quickly in the mouth, which avoids the presence of gum fillings that are difficult to swallow and have strange foreign body chewing taste, so that the delicious degree of food is subversively improved, and it is easy to arouse the enthusiasm of chocolate lovers, thereby setting off a chocolate innovation upsurge.

Of course, the method of using solid fat to prepare the solid fat layer covering the liquid core according to the present disclosure may also adopt the currently available raw materials and methods for center-filled foods to prepare the corresponding liquid core, such as liquor filling and emulsion, they may be covered by the solid fat layer prepared by the method according to the present disclosure, and water content thereof may be in a range of 10-100%, or it may be less than 10%. The method according to the present disclosure can also be used for coating other liquid core materials with water content less than 10% to prepare a center-filled composition.

In addition, in the embodiments of the present disclosure, only a method for preparing a hemispherical liquid center-filled composition is provided, but liquid center-filled compositions having other shapes may be prepared by adjusting the shape of the used molds, all of which are within the protection scope of the present disclosure.

In addition, the embodiments of the present invention only provide a method for preparing the liquid center-filled composition by using cacao butter replacer and/or cocoa butter replacer and cacao butter and/or cocoa butter, but are not limited thereto. Similar effects can be achieved by using other solid fat having similar properties, for example, high melting point palm oil (such as 40°C palm oil, 42°C palm oil, 45°C palm oil and 55°C palm oil), hydrogenated or solidified vegetable oil, and the like, which will not be enumerated in the present invention.

In addition to chocolate compositions, the scope of the present disclosure includes the filling layer applied to hygroscopic products made of flour, such as cakes and biscuits, for encapsulating water-containing contents. From the daily life experience, it can be imagined that once these hygroscopic products come into contact with water, they will absorb water, become wet and drenched, and lose their original taste. However, when the filling layer is added, the contents will be prevented from leaking out, and the outer layer will not come into contact with any moisture in the contents. Flour-based products encapsulating water-containing contents can be commercially produced on a large scale, and long-distance transportation and long-term storage become feasible due to the stable combination, which has great potential and practical significance.

There are many specific application ways of the present disclosure, and the above description is only preferred embodiments of the present disclosure. It should be noted that the above embodiments are only intended to illustrate the present invention and are not intended to limit the protection scope of the present invention. Several modifications can be made by those of ordinary skill in the art without departing from the concept of the present disclosure, and they should also be considered to fall within the protection scope of the present disclosure.

## Claims

1. A liquid center-filled composition comprising a solid fat layer and a liquid core enclosed within the solid fat layer.

2. The liquid center-filled composition according to claim 1, wherein the water content of the liquid core is 10-100%.

3. The liquid center-filled composition according to claim 1, wherein the solid fat layer is prepared by using high melting point solid fat as a main raw material.

4. The liquid center-filled composition according to claim 3, wherein the high melting point solid fat has a melting point of 20-45 °C.

5. The liquid center-filled composition according to claim 4, wherein the high melting point solid fat comprises at least one of coconut oil, butter, high melting point palm oil, cacao butter replacer, cocoa butter replacer, cacao butter, cocoa butter, hydrogenated or solidified vegetable oil, and refined vegetable oil.

6. The liquid center-filled composition according to claim 5, wherein the high melting point solid fat is selected from cacao butter replacer, cocoa butter replacer, cacao butter, cocoa butter; and the cacao butter is any one of tempered cacao butter and non-tempered cacao butter and the cocoa butter is any one of tempered cocoa butter and non-tempered cocoa butter.

7. The liquid center-filled composition according to claim 6, wherein the cacao butter and the cocoa butter are tempered cacao butter and tempered cocoa butter obtained through tempering treatment.

8. The liquid center-filled composition according to claim 7, wherein the preparation steps of the tempered cacao butter or the tempered cocoa butter comprise: heating the cacao butter or the cocoa butter to 44-46 °C for melting, cooling the melted cacao butter or the melted cocoa butter to 26-28 °C for 10-15 minutes, and heating the cacao butter or the cocoa butter to 31-33 °C for 10-15 minutes.

9. The liquid center-filled composition according to claim 1, wherein the solid fat layer has a thickness less than or equal to 1 cm.

10. The liquid center-filled composition according to claim 9, wherein the solid fat layer has a thickness of 0.05 mm to 1 cm.

11. The liquid center-filled composition according to any one of claims 2 to 10, wherein the preparation of the solid fat layer further comprises adding a food additive; wherein the food additive is selected from at least one of edible and oil-soluble natural pigment, flavoring agent and spice.

12. The liquid center-filled composition according to claim 1 or 2, wherein the liquid core is selected from at least one of water, fresh milk, cream, liquor, fruit juice, tea, soup, blended drink and sauce.

13. A method for preparing the liquid center-filled composition according to any one of claims 1 to 12, wherein the liquid center-filled composition is prepared by the method comprising the following steps A1-A3 or B1-B3:
A1, injecting a raw material for preparing the solid fat layer into a mold with a required shape and solidifying to obtain a concave solid fat layer having an opening at an upper end;
A2, injecting liquid into the concave solid fat layer from the opening at the upper end of the concave solid fat layer to a required level;
A3, injecting the raw material for preparing the solid fat layer above the liquid level for encapsulating to obtain the liquid center-filled composition;
or
B1, injecting a raw material for preparing the solid fat layer into an inner shell mold with a required shape and solidifying to obtain a concave solid fat layer having an opening at an upper end;
B2, placing the concave solid fat layer prepared in the step B 1 into an outer shell mold, and injecting liquid into the concave solid fat layer from the opening at the upper end of the concave solid fat layer to a required level;
B3, injecting the raw material for preparing the solid fat layer into the outer shell mold to coat the raw material on the outside of the concave solid fat layer and above the liquid level, and solidifying to form a second solid fat layer to obtain the liquid center-filled composition.

14. The method for preparing the liquid center-filled composition according to claim 13, wherein the liquid center-filled composition is prepared by the method comprising Steps B1-B3 when the raw material for preparing the solid fat layer is tempered cacao butter or tempered cocoa butter or a mixture of the tempered cacao butter and the tempered cocoa butter.

15. The method for preparing the liquid center-filled composition according to claim 14, wherein in Steps B1-B3, the solidifying is carried out by being placed at 20-22°C for 1.5 to 3 hours.

16. Use of the liquid center-filled composition according to any one of claims 1 to 12 in preparation of center-filled food.

17. The use according to claim 16, wherein the center-filled food comprises center-filled desserts selected from any one of center-filled chocolate, center-filled biscuit, center-filled bread, center-filled mooncake, center-filled glutinous rice ball, center-filled crisp, center-filled candy and center-filled cake.
